Europäisches Patentamt

European Patent Office

Office européen des brevets

(19)

(11) Veröffentlichungsnummer: **0 077 291
B1**

(12) **EUROPÄISCHE PATENTSCHRIFT**

(45) Veröffentlichungstag der Patentschrift:
**11.09.85**

(51) Int. Cl.⁴: **H 02 K 5/167,** F 16 C 33/10,
F 16 C 37/00, F 03 B 11/06

(21) Anmeldenummer: **82730123.5**

(22) Anmeldetag: **22.09.82**

(54) **Selbstpumpendes Spurlager für elektrische Maschinen mit vertikaler Welle, insbesondere Wasserkraftgeneratoren.**

(30) Priorität: **13.10.81 DE 3141061**

(43) Veröffentlichungstag der Anmeldung:
**20.04.83 Patentblatt 83/16**

(45) Bekanntmachung des Hinweises auf die Patenterteilung:
**11.09.85 Patentblatt 85/37**

(84) Benannte Vertragsstaaten:
**AT CH DE FR GB IT LI SE**

(56) Entgegenhaltungen:
**DE - C - 901 360
GB - A - 1 018 121**

(73) Patentinhaber: **Siemens Aktiengesellschaft, Berlin und München Wittelsbacherplatz 2, D-8000 München 2 (DE)**

(72) Erfinder: **Pollok, Hans-Jürgen, Dipl.-Ing., Limastrasse 22, D-1000 Berlin 37 (DE)**

BUNDESDRUCKEREI BERLIN

## Beschreibung

Die Erfindung bezieht sich auf ein selbstpumpendes Spurlager für elektrische Maschinen mit vertikaler Welle, insbesondere Wasserkraftgeneratoren, bei dem der Ölumlauf durch im rotierenden Spurring vorgesehene, zumindest angenähert radial verlaufende Bohrungen hervorgerufen wird, die das Öl aus einem oberhalb des Lagerspaltes radial innenliegenden Ölansaugraum absaugen und über einen im gegenüberliegenden, stehenden Teil des Spurlagertopfes angeordneten Ringkanal den Kühlern zuführen, von denen das Öl zu dem Ölansaugraum zurückgeleitet wird, wobei der Spurlagertopf mindestens eine stehende Zylinderwand aufweist, die benachbart zur Welle liegt und den Spurlagertopf begrenzt und vor der eine vom Spurring herunterragende rotierende Zylinderwand liegt.

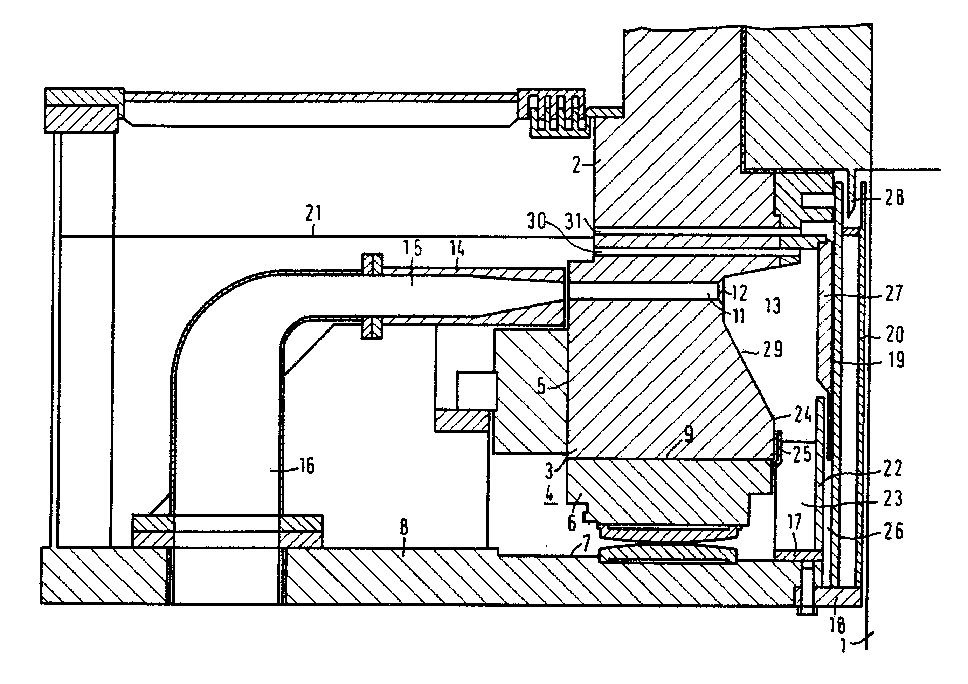

Ein derartiges selbstpumpendes Spurlager ist aus der DE-C-901 360 (Fig. 3) bekannt. Die sich überlappenden, voreinanderliegenden, stehenden und rotierenden Zylinderwände auf der radial innenliegenden Seite des Spurlagertopfes dienen zu dessen Abdichtung gegenüber der Welle und sollen das Eindringen von Luft in das Innere und somit ein Aufschäumen des Öls verhindern. Gelangen nämlich Luftblasen in den Ölkreislauf, so führt dies zu einem starken Absinken des für die Ölumwälzung benötigten Öldruckkes und damit zu einer Beeinträchtigung der Kühlung des Lagers. Außerdem ist die Tragfähigkeit eines Filmes aus aufgeschäumtem Öl ebenfalls geringer. Man sieht daher meist nicht nur eine stehende Zylinderwand vor, die mit einer rotierenden überlappt angeordnet ist, sondern mehrere, aber trotzdem läßt sich das Eindringen von Luftblasen in den Ölraum des Spurlagertopfes bei den bekannten Traglagern nicht mit Sicherheit vermeiden.

Der Erfindung liegt die Aufgabe zugrunde, bei einem selbstpumpenden Spurlager das Abscheiden von Luft aus dem im Spurlagertopf befindlichen Öl zu erleichtern und das Eindringen von Luft in den Spurlagertopf aus der inneren Wellendichtung zu verhindern.

Zur Lösung dieser Aufgabe ist ein selbstpumpendes Spurlager der eingangs beschriebenen Art gemäß der Erfindung so ausgebildet, daß der Ölansaugraum durch eine große, zu den radialen Bohrungen reichende Aussparung auf der Innenseite des Spurringes vergrößert ist und daß zusätzliche radiale Bohrungen oberhalb der genannten Bohrungen vorgesehen sind, die sich unterhalb des Ansatzes der vom Spurring ausgehenden rotierenden Zylinderwand zu dem Ansaugraum öffnen. Der nur von rotierenden Flächen umgebene Ölansaugraum, der duch die Wände der Aussparung auf der radial innenliegenden Seite des Spurringes und durch die rotierende Zylinderwand begrenzt ist, bildet einen rotierenden Ölraum großen Volumens. Dieser wirkt wie eine Zentrifuge und je nach Drehzahl und Verweilzeit des Öles in diesem Raum ergibt sich eine Entmischung von Luftblasen und Öl bzw. eine Trennung von stärker oder schwächer mit Luft angereichertem Öl, wobei die Luftblasen und das stärker mit Luft angereicherte aufgeschäumte Öl nach oben steigen bzw. sich radial innen vor der rotierenden Zylinderwand sammeln und nicht durch die pumpenden radialen Bohrungen für den Ölkreislauf angesaugt werden. Sie treten vielmehr in die unterhalb des Ansatzes der vom Spurring herunterragenden rotierenden Zylinderwand liegenden zusätzlichen radialen Bohrungen ein und werden somit nicht in den Ölkreislauf eingezogen. Sie gelangen vielmehr über diese zusätzlichen Bohrungen auf den ruhigen, von stehenden Wänden umgebenen, radial außenliegenden Teil des Spurlagertopfes, wo im Laufe der Zeit die eingedrungene Luft über den Ölspiegel aus dem Öl austritt bzw. eine Entschäumung des Öles auftritt. Der rotierende großräumige Ölansaugraum hat außerdem den Vorteil, daß sich bereits vor den Öffnungen der pumpenden radialen Bohrungen ein Druck aufbaut, so daß die Gefahr des Abreißens der Strömung und somit eine Unterbrechung des Ölkreislaufes in den Bohrungen vermindert wird.

Es ist zweckmäßig, daß die inneren Öffnungen der pumpenden radialen Bohrungen an der radial äußersten Stelle der Aussparung im Spurring liegen.

Im folgenden sei die Erfindung noch anhand des in der Zeichnung dargestellten Ausführungsbeispiels näher erläutert. Diese zeigt einen Radialschnitt durch ein gemäß der Erfindung ausgebildetes selbstpumpendes Spurlager.

Die vertikale Welle 1 eines Wasserkraftgenerators wird über den Tragkopf 2 mit dem Spurring 3 von einem selbstpumpenden Spurlager getragen, das aus einem Traglager 4 und einem Führungslager 5 besteht. Das Traglager 4 besteht aus einzelnen Spursegmenten 6, die in bekannter Weise auf dem Boden 7 des Spurlagertopfes 8 einstellbar gelagert sind.

Zur Ermöglichung eines ständigen Ölumlaufs, damit das durch den Lagerspalt 9 durchtretende und sich dabei erwärmende Öl nichtdargestellten Kühlern zugeführt werden kann, sind im Spurring 3 radiale Bohrungen 11 vorgesehen, die beim Umlaufen des Spurringes 3 nach Art einer Kreiselpumpe eine Pumpenwirkung hervorrufen und das Öl von dem vor den inneren Öffnungen 12 der radialen Bohrungen 11 liegenden Ölansaugraum 13 ansaugen und zu dem im stehenden Teil 14 angeordneten Ringkanal 15 fördern, von dem aus das Öl über eine Leitung 16 zu den nicht dargestellten Kühlern und anschließend in ebenfalls nicht dargestellter Weise wieder dem Ölraum des Spurlagertopfes 8 zugeführt wird.

Zur Abdichtung des stehenden Spurlagertopfes 8 zur rotierenden vertikalen Welle 1 sind am Boden 7 radial innenliegend zwei Tragringe 17, 18 befestigt, die jeweils zwei parallel zueinander verlaufende Zylinderwände tragen. Der Tragring 18 liegt der Welle 1 benachbart und weist zwei Zylinderwände 19, 20 auf, von denen die Zylinderwand 20 die unmittelbar vor der Mantelfläche der Welle 1 liegende innere Begrenzung des Spurlagertopfes 8 bildet. Beide Zylinderwände 19, 20 reichen bis oberhalb des Ölspiegels 21 des im Spurlagertopf 8 befindlichen Öles. Der Tragring 17 weist eine bis oberhalb des Lagerspaltes 9 reichende Zylinderwand 22 auf sowie eine über zur Beruhigung des Öls dienende Rippen 23 gehaltene, sich in unmittelbarer Nähe vor der radialen Innenfläche 24 des Spurringes 3 befindliche Zylinderwand 25, die den Lagerspalt 9 abdeckt. In den Spalt 26 zwischen den stehenden Zylinderwänden 22 und 19 ragt eine rotierende Zylinderwand 27 hinein, die unterhalb des Ölspiegels 21 vom Spurring 3 bzw. Tragkopf 2 ausgeht. Zur Verbesserung der Wellenabdichtung ist außerdem noch eine zweite rotierende Zylinderwand 28 vorgesehen, die in den Spalt zwischen den beiden stehenden Zylinderwänden 19 und 20 hineinragt, sich aber oberhalb des Ölspiegels 21 befindet. Diese ineinandergeschachtelten, jeweils enge Spalte zueinander bildenden stehenden und rotierenden Zylinderwände sollen ein Eindringen von Luft in das im Spurlagertopf 8 befindliche Öl vermeiden und somit auch verhindern, daß dieses aufschäumt.

Der Ölansaugraum 13 hat durch eine große, zu den Öffnungen 12 der radialen Bohrungen 11 im Spurring 3 reichende Aussparung 29 ein großes Volumen. Da der Ölansaugraum 13 nur von rotierenden Flächen begrenzt ist, nämlich von den Wänden der Aussparung 29 im Spurring 3 und von der rotierenden Zylinderwand 27, rotiert das in diesem Ölansaugraum 13 befindliche Öl mit. Dadurch wirkt der Ölansaugraum 13 wie eine Zentrifuge, so daß sich je nach Drehzahl und Verweilzeit des Öles in diesem Ölansaugraum 13 eine Entmischung von gegebenenfalls im Öl befindlichen Luftblasen oder von Ölschaum zum Öl ergibt. Das luftarme Öl tritt über die radialen Bohrungen 11, deren Öffnungen 12 sich an der radial äußersten Stelle der Aussparung 29 befinden, in den Ringkanal 15 über und nimmt somit am Ölkreislauf teil. Luftblasen oder stärker mit Luft versetztes Öl sammelt sich dagegen radial innen und an der obersten Stelle des Ölansaugraumes 13, d. h. unmittelbar unterhalb des Ansatzes der rotierenden Zylinderwand 27 am Spurring 3. Dort sind zusätzliche radiale Bohrungen 30 vorgesehen, die dieses aufgeschäumte Öl oder die Luftblasen auf die andere Seite des Spurringes 3 fördern und somit in den ruhigen Teil des Ölraumes im Spurlagertopf 8, wo die Luftblasen zum Ölspiegel 21 gelangen und austreten können bzw. wo eine Entschäumung des Öles stattfindet. Noch weiter oberhalb des Ölspiegels 21 liegen weitere radiale Bohrungen 31, wodurch die innerhalb und außerhalb des Spurringes 3 liegenden Lufträume oberhalb des Ölspiegels 21 miteinander verbunden sind.

Sollte trotz der miteinander verschachtelten rotierenden und stehenden Zylinderwände durch Turbulenzen oder Ölspiegelabsenkung eventuell zwischen der stehenden Zylinderwand 19 und der rotierenden Zylinderwand 27 Luft in das Innere des Spurlagertopfes 8 gelangen, so wird diese durch die stehende Zylinderwand 22 erst weit oberhalb des Lagerspaltes 9 in den rotierenden Ölansaugraum 13 gelangen, so daß eine Gefahr, daß diese Luft in den Lagerspalt 9 gelangt, nicht besteht.

**Patentansprüche**

1. Selbstpumpendes Spurlager für elektrische Maschinen mit vertikaler Welle (1), insbesondere Wasserkraftgeneratoren, bei dem der Ölumlauf durch im rotierenden Spurring (3) vorgesehene, zumindest angenähert radial verlaufende Bohrung (11) hergerufen wird, die das Öl aus einem oberhalb des Lagerspaltes radial innenliegenden Ölansaugraum (13) absaugen und über einen im gegenüberliegenden, stehenden Teil des Spurlagertopfes (8) angeordneten Ringkanal (15) den Kühlern zuführen, von denen aus das Öl zu dem Ölansaugraum (13) zurückgeleitet wird, wobei der Spurlagertopf (8) mindestens eine stehende Zylinderwand (19) aufweist, die benachbart zur Welle (1) liegt und den Spurlagertopf begrenzt und vor der eine vom Spurring (3) herunterragende rotierende Zylinderwand (27) liegt, dadurch gekennzeichnet, daß der Ölansaugraum (13) durch eine große, zu den radialen Bohrungen (11) reichende Aussparung (29) auf der Innenseite (24) des Spurringes (3) vergrößert ist und daß zusätzliche radiale Bohrungen (30) oberhalb der genannten Bohrungen (11) vorgesehen sind, die sich unterhalb des Ansatzes der vom Spurring (3) ausgehenden rotierenden Zylinderwand (27) zu dem Ölansaugraum (13) öffnen.

2. Selbstpumpendes Spurlager nach Anspruch 1, dadurch gekennzeichnet, daß sowohl die vom Spurring (3) herunterragende rotierende Zylinderwand (27) als auch die zusätzlichen radialen Bohrungen (30) unterhalb des Ölspiegels (21) liegen.

3. Selbstpumpendes Spurlager nach Anspruch 1, dadurch gekennzeichnet, daß die inneren Öffnungen (12) der radialen Bohrungen (11) an der radial äußersten Stelle der Aussparung (29) liegen.

**Claims**

1. Self-pumping thrust bearing for vertical shaft (1) electrical machines, in particular water-driven generators, in which the oil circulation is produced by bores (11) which extend at least approximately radially and are arranged in the rotating thrust ring (3), which bores suck the oil from a radially inner oil suction space (13) above the bearing gap and supply it to the coolers through an annular channel (15), oppositely arranged in a stationary part of the thrust bearing container (8), from which coolers the oil is returned to the oil suction space (13), the thrust bearing container (8) having at least one stationary cylinder wall (19) which is adjacent to the shaft (1) and delimits the thrust bearing container and in front of which is arranged a rotating cylinder wall (27), which projects downwardly from the thrust ring (3), characterised in that the oil suction space (13) is increased by a large recess (29) on the inside (24) of the thrust ring (3), which recess extends to the radial bores (11); and that additional radial bores (30) are arranged above the previously-mentioned bores (11), which open into the oil suction space (13) below the extension of the rotating cylinder wall (27) proceeding from the thrust ring (3).

2. A self-pumping thrust bearing as claimed in Claim 1, characterised in that both the rotating cylinder wall (27) which projects downwardly from the thrust ring (3), and also the additional radial bores (30), are arranged below the oil level (21).

3. A self-pumping thrust bearing as claimed in Claim 1, characterised in that the inner openings (12) of the radial bores (11) are arranged at the radially most outwardly point of the recess (29).

**Revendications**

1. Palier de butée à autocirculation du lubrifiant pour des machines électriques à arbre (1) vertical, en particulier pour des génératrices hydrauliques, dans lequel la circulation de l'huile est provoquée par des perçages (11) prévus dans la bague tournante (3) du palier, s'étendant au moins approximativement dans le sens radial, aspirant de l'huile dans une chambre d'aspiration de l'huile 13, située radialement et intérieurement au-dessus de la fente du palier, et l'amenant, par l'intermédiaire d'un canal annulaire (15) agencé dans l'élément fixe et opposé du pot (8) du palier de butée, à des refroidisseurs à partir desquels l'huile est renvoyée à la chambre d'aspiration de l'huile (13), le pot (8) du palier de butée présentant au moins une paroi cylindrique fixe (19), située dans le voisinage de l'arbre (1) et limitant le pot du palier de butée, et devant laquelle est située une paroi cylindrique tournante (27) qui s'étend vers le bas à partir de la bague tournante (3) du palier, caractérisé par le fait que la chambre d'aspiration de l'huile (13) est agrandie sur le côté intérieur (24) de la bague tournante (3) par un évidement important (29) qui s'étend jusqu'aux perçages (11), et que sont prévus, au-dessus desdits perçages (11), des perçages radiaux supplémentaires (30) qui s'ouvrent vers la chambre d'aspiration de l'huile (13), en-dessous de l'embase de la paroi cylindrique tournante (27) qui s'étend à partir de la bague tournante (3).

2. Palier de butée à autocirculation du lubrifiant selon al revendication 1, caractérisé par le fait qu'aussi bien la paroi cylindrique tournante (27) qui s'étend vers le bas à partir de la bague tournante (3) que les perçages radiaux supplémentaires (30) se situent en-dessous du niveau de l'huile (21).

3. Palier de butée à autocirculation du lubrifiant selon la revendication 1, caractérisé par le fait que les ouvertures intérieures (12) des perçages radiaux (11) se situent à l'emplacement radialement extérieur de l'évidement (29).